# EUROPEAN PATENT APPLICATION

(11) **EP 3 985 529 A1**
(43) Date of publication of application: **20.04.2022**
(21) Application number: 21203137.1
(22) Date of filing: 18.10.2021
(51) Int. Cl.: G06F 16/906, G06F 16/901

(54) **LABELING AND DATA AUGMENTATION FOR GRAPH DATA**

(30) Priority: 19.10.2020 US 202017074392
(71) Applicant: Fujitsu Limited, Kawasaki-shi, Kanagawa 211-8588 (JP)
(72) Inventor: AU, Wing Yee, Sunnyvale, California, 94085 (US); FISCHER, Jeffrey Michael, Sunnyvale, California, 94086 (US); UCHINO, Kanji, Santa Clara, California, 95051 (US)
(74) Representative: Hoffmann Eitle

(57) **Abstract**

Operations may include identifying a plurality of graphs as ground truth graphs in response to each ground truth graph having a heuristic characteristic and being categorized as a first- or second-class graph based on labeling of the graphs with respect to the heuristic characteristic. The operations may include identifying a graph as an unlabeled graph, the graph being unlabeled with respect to the heuristic characteristic. The operations may include comparing the unlabeled graph to the first- and second-class graphs, the comparing being based on the heuristic characteristic and including one or more operations selected from a group of operations including performing similarity matching, model-based heuristics operations, or query analysis operations. The operations may include categorizing the unlabeled graph as a first- or second-class graph based on the comparing. The operations may include training a machine learning model using the ground truth graphs and the previously unlabeled graph.

## Description

The present disclosure generally relates to labeling and data augmentation for graph data.

### BACKGROUND

A user may want to train a machine learning module to process and analyze graph data. The user may supply the machine learning module with a training dataset including sample graph data. The graphs in the training dataset may be labeled to guide how the machine learning module analyzes the sample graph data in the training dataset.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, operations may include obtaining a graph dataset. The operations may include identifying a plurality of first graphs of the graph dataset as ground truth graphs in response to each first graph of the plurality of first graphs having a heuristic characteristic and being categorized as a first class or as a second class based on labeling of the first graphs with respect to the heuristic characteristic. The operations may include identifying a second graph of the graph dataset as an unlabeled graph, the second graph being unlabeled with respect to the heuristic characteristic. The operations may include comparing the second graph to the first class, the comparing being based on the heuristic characteristic and including one or more operations selected from a group of operations including performing similarity matching, model-based heuristics operations, or query analysis operations. The operations may include comparing the second graph to the second class, the comparing being based on the heuristic characteristic and including one or more operations selected from the group of operations including performing similarity matching, model-based heuristics operations, or query analysis operations. The operations may include labeling the second graph as the first class or as the second class based on the comparing of the second graph to the first class and the comparing of the second graph to the second class. The operations may include training a machine learning model using the plurality of first graphs and the labeled second graph.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the accompanying drawings in which:
Figure 1 is a diagram representing an example system related to generating labels for graph data.
Figure 2 is a flowchart of an example method of generating labels for graph data.
Figure 3 is a diagram representing an example system related to generating labels for graph data using a similarity matcher.
Figure 4A is an example method of determining a multi-dimensional array based on graph data via node tokenization.
Figure 4B is an example method of determining a multi-dimensional array based on graph data via edge tokenization.
Figure 5 is an example method of generating labels for graph data using similarity matching.
Figure 6 is a diagram representing an example system related to predicting labels for graph data using a model-based heuristics operations.
Figure 7 is an example method of generating labels for graph data using model-based heuristics operations.
Figure 8 is a diagram representing an example system related to predicting labels for graph data using query analysis operations.
Figure 9 is an example method of generating labels for graph data using query analysis operations.
Figure 10 is an example system that may be used to generate labels for graph data.

### DETAILED DESCRIPTION

A graph is a data structure made up of nodes and edges. A node in a graph represents a point of interest, and an edge in a graph represents a connection between two or more nodes. A node in a graph may be connected to another node by an edge indicating a relation exists or movement is possible between the two nodes. An edge connecting two nodes may be undirected or directed. An undirected connection may indicate the relation or movement is bidirectional, while a directed connection may indicate the nodes may be traversed in only one direction. A node may be connected to one or more nodes with one edge between any two nodes in a simple graph. In a multigraph, a node may be connected to one or more nodes with one or more edges between any two nodes. In some multigraphs, a node may be connected to itself in a loop by one or more edges.

The embodiments described in the present disclosure may relate to programmatically labeling graph data to train a machine learning model. Graph datasets currently used to train machine learning models are often insufficiently labeled, which may lead to problems with the machine learning model. In some circumstances, insufficiently labeled training graph data may result in a machine learning model being overfitted to the data. In these and other circumstances, the prediction accuracy of the machine learning model may be reduced in instances in which graph data different from the training graph data is introduced to the machine learning model.

In some circumstances, a graph dataset may be highly imbalanced because graph data within the graph dataset are highly skewed towards a first class compared to a second class. In these and other circumstances, the prediction accuracy of the machine learning model may be reduced because the machine learning model may be probabilistically biased towards the majority first class over the minority second class. In these and other circumstances, the machine learning model may predict more false positives or false negatives than a machine learning model trained with a more balanced graph dataset.

In some circumstances, manually labeling graph data for training a machine learning model may also be difficult. Labeling graph data may include more detailed labels than labeling image, text, or other forms of data. Additionally, a user manually labeling graph data may want to better understand the data being labeled than in instances in which the user manually labels image, text, or other forms of data. In these and other circumstances, manually labeling graph data may be inefficient and difficult due to both the complexity of the graph data and the large amount of graph data used to train a machine learning model.

The present disclosure may be directed to, among other things, improving efficiency of training machine learning models to interpret and analyze graph data. In particular, as described in further detail below, a graph analysis system may be configured to obtain a graph dataset. The graph analysis system may categorize graphs in the graph dataset based on whether the graphs were previously labeled with respect to a heuristic characteristic. Graphs previously labeled with respect to the heuristic characteristic may be categorized as ground truth graphs against which unlabeled graphs may be compared. Each ground truth graphs may be labeled as part of a first class or as part of a second class depending on the heuristic characteristic. The graph analysis system may compare the unlabeled graphs to the ground truth graphs with respect to the heuristic characteristic using at least one of similarity matching, model-based heuristics operations, or query analysis operations. The graph analysis system may label an unlabeled graph as part of the first class or as part of the second class based on the comparison between the unlabeled graph and the ground truth graphs. The graph analysis system may label an unlabeled graph as part of a third class in response to the unlabeled graph being dissimilar or not similar enough to the ground truth graphs. The graphs labeled by the graph analysis system may be used to train a machine learning model.

Certain embodiments of the present disclosure may provide improvements over previous iterations of machine learning models related to graph data. For example, data analysis, in particular data analysis of graph data, by machine learning models may be improved by configuring a computing system in a manner in which the computing system is able to programmatically generate and/or label graph data capable of training the machine learning model. As another example, computing, network, and human resources may be preserved as users manually searching for and labeling graph data to train a machine learning model may be avoided, and graph data is automatically generated and/or labeled.

Embodiments of the present disclosure are explained with reference to the accompanying figures.

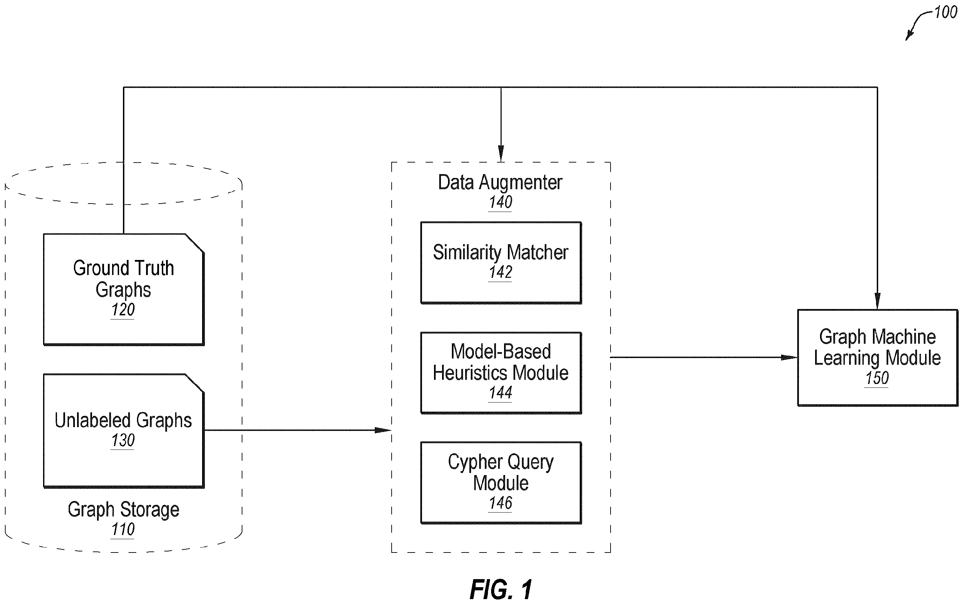

Figure 1 is a diagram of an example system 100 related to programmatically generating labels for graph data, in accordance with one or more embodiments of the present disclosure. The system 100 may include a graph storage 110, a data augmenter 140, and a graph machine learning system 150.

The graph storage 110 may include any suitable computer-readable storage media configured to store one or more graph datasets. The one or more graph datasets may be obtained from publicly available analytics graph databases, such as the Neo4j Graph Database. Additionally or alternatively, the one or more graph datasets may be obtained from one or more proprietary graph storages. The one or more graph datasets obtained from the graph storage 110 may relate to a topic of interest, the topic of interest including any topic capable of being represented by a graphical network, such as financial transactions, information-technology network security, social media networks, chemical molecules, and geographical maps.

In some embodiments, the one or more graph datasets in graph storage 110 may include one or more ground truth graphs 120 and one or more unlabeled graphs 130. The ground truth graphs 120 may include one or more graphs from the graph storage 110 related to the topic of interest that have been labeled with respect to a heuristic characteristic that is related to the topic of interest. The heuristic characteristic that is related to the topic of interest may include any characteristic of a graph that provides information about the topic of interest. In some instances, the heuristic characteristic may be a characteristic of a graph that facilitates categorization of the graph with respect to the topic of interest. For example, a graph dataset may include graphs representing molecular structures. The topic of interest may be whether a particular graph contained in the graph dataset represents an organic molecule. A heuristic characteristic that is related to the topic of interest may be the number of carbon atoms exceeding a threshold value or the absence of inorganic atoms. The particular graph in the graph dataset may be labeled with a "Yes" label indicating the particular graph represents an organic molecule or with a "No" label indicating the particular graph does not represent an organic molecule.

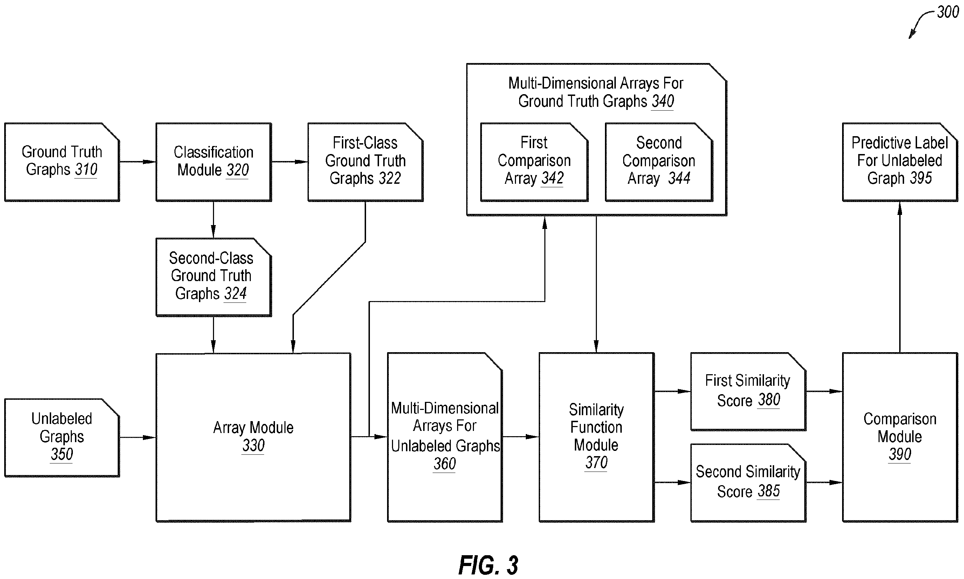

The ground truth graphs 120 may be categorized as first-class graphs or second-class graphs based on the labels of the ground truth graphs 120. Categorization of ground truth graphs 120 in a same class may be based on the labels of the ground truth graphs being similar to the labels of other ground truth graphs categorized in the same class as described in further detail below with respect to Figures 3-9. In some embodiments, ground truth graphs 120 may be categorized in a same class in response to each ground truth graph of the same class having the same or similar labels. For example, ground truth graphs 120 may be labeled as responsive to a topic of interest (labeled as "Responsive" or "Yes") or as unresponsive to the topic of interest (labeled as "Unresponsive" or "No"); graphs labeled as "Yes" or responsive to the topic of interest may be categorized as first-class graphs, and graphs labeled as "No" or unresponsive to the topic of interest may be categorized as second-class graphs. In some embodiments, the ground truth graphs 120 may be categorized into more than two classes. For example, a particular ground truth graph may be labeled "Yes," "Likely," "Unlikely," or "No" and categorized as a first-class graph, second-class graph, third-class graph, or fourth-class graph, respectively.

For example, in some instances the graph storage 110 may include one or more graph datasets of financial transactions for credit card accounts. In these or other embodiments, the one or more graph datasets in graph storage 110 may include one graph for each credit card account's transactions. Further, the topic of interest may include whether one or more of the transactions are fraudulent. A first ground truth graph may be labeled with a "Yes" label indicating the presence of fraudulent transactions. The first ground truth graph labeled with the "Yes" label may be categorized as a first-class graph.

Additionally or alternatively, a second ground truth graph may include a graph representing a credit card account that does not include fraudulent transactions, which may be labeled with a "No" label for the absence of fraudulent transactions. The second ground truth graph labeled with the "No" label may be categorized as a second-class graph.

One or more graphs in the graph storage 110 may be unlabeled with respect to the topic of interest and may be categorized as the one or more unlabeled graphs 130. In the present disclosure, reference to a graph being "unlabeled" may indicate that the graph is unlabeled with respect to the respective topic of interest at issue. Accordingly, a graph that is referred to as being "unlabeled" may also be labeled with respect to some other topic of interest, but not the one that is at issue with respect to machine learning training.

The data augmenter 140 may include code and routines configured to enable a computing system to perform one or more operations. Additionally or alternatively, the data augmenter may be implemented using hardware including a processor, a microprocessor (e.g., to perform or control performance of one or more operations), a field-programmable gate array (FPGA), or an application-specific integrated circuit (ASIC). In some other instances, the data augmenter 140 may be implemented using a combination of hardware and software. In the present disclosure, operations described as being performed by the data augmenter 140 may include operations that the data augmenter 140 may direct a corresponding system to perform. The data augmenter 140 may be configured to perform a series of operations with respect to the graphs of the graph storage 110.

The data augmenter 140 may be configured to identify and differentiate between the ground truth graphs 120 and the unlabeled graphs 130. The data augmenter 140 may be configured to identify one or more graphs obtained from the graph storage 110 as unlabeled graphs 130 based on the one or more graphs being unlabeled and uncategorized as first-class graphs or second-class graphs. The data augmenter 140 may be configured to determine which of the one or more unlabeled graphs may be categorized as first-class graphs or as second-class graphs based on the categorization of the ground truth graphs as first-class graphs or as second-class graphs.

For example, the data augmenter 140 may be configured to obtain a particular first graph representing a credit card account including fraudulent transactions that is labeled with a "Yes" label indicating the presence of fraudulent transactions on the credit card account from the graph storage 110. The particular first graph obtained by the data augmenter 140 may be indicated as a ground truth graph 120. Additionally or alternatively, the particular first graph may be identified as a ground truth graph 120 because the particular first graph is labeled with respect to the topic of interest being the presence of fraudulent transactions. The particular first graph may be further categorized as a first-class graph because the particular first graph is labeled with the "Yes" label. Additionally or alternatively, the data augmenter 140 may be configured to obtain a particular second graph representing a credit card account in which the particular second graph is unlabeled regarding the presence of fraudulent transactions. The data augmenter 140 may be configured to exclude the particular second graph from being labeled with either the "Yes" label or the "No" label.

In these or other embodiments, the data augmenter 140 may be configured to obtain the unlabeled graphs 130 and a first subset of the ground truth graphs 120. The data augmenter 140 may be configured to select the first subset of ground truth graphs to use as training for labeling the unlabeled graphs 130. The first subset of ground truth graphs may include one or more first-class graphs and one or more second-class graphs.

The data augmenter 140 may be configured to select a second subset of the ground truth graphs 120 to send to the graph machine learning module 150 for use as a verification dataset. The second subset of ground truth graphs may include one or more first-class graphs not selected for the first subset and one or more second-class graphs not selected for the first subset. The data augmenter 140 may be configured to select the first subset of ground truth graphs based on defined parameters relating to one or more heuristic characteristics of the ground truth graphs 120.

For example, ground truth graphs 120 may be selected as part of a particular first subset of ground truth graphs based on a defined parameter such as a specific date range during which the ground truth graphs were labeled. Additionally or alternatively, ground truth graphs 120 may be selected as part of the particular first subset of ground truth graphs based on a defined parameter indicating the first subset of ground truth graphs must be graphs obtained from the Neo4j Graph Database. In some embodiments, the data augmenter 140 may be configured to select the first subset of ground truth graphs at random. In these and other embodiments, the data augmenter 140 may be configured to define the second subset of ground truth graphs as any ground truth graphs 120 not selected for the first subset of ground truth graphs.

The data augmenter 140 may be configured to analyze the first subset of the ground truth graphs and the unlabeled graphs 130 to programmatically generate labels for the unlabeled graphs 130. The data augmenter 140 may be configured to generate a label for a particular unlabeled graph 130 based on one or more heuristic characteristics present in both the particular unlabeled graph 130 and the first subset of the ground truth graphs. In some embodiments, the data augmenter 140 may be configured to label the particular unlabeled graph 130 by comparing the particular unlabeled graph 130 to the first class of ground truth graphs and comparing the particular unlabeled graph 130 to the second class of ground truth graphs based on the one or more shared heuristic characteristics.

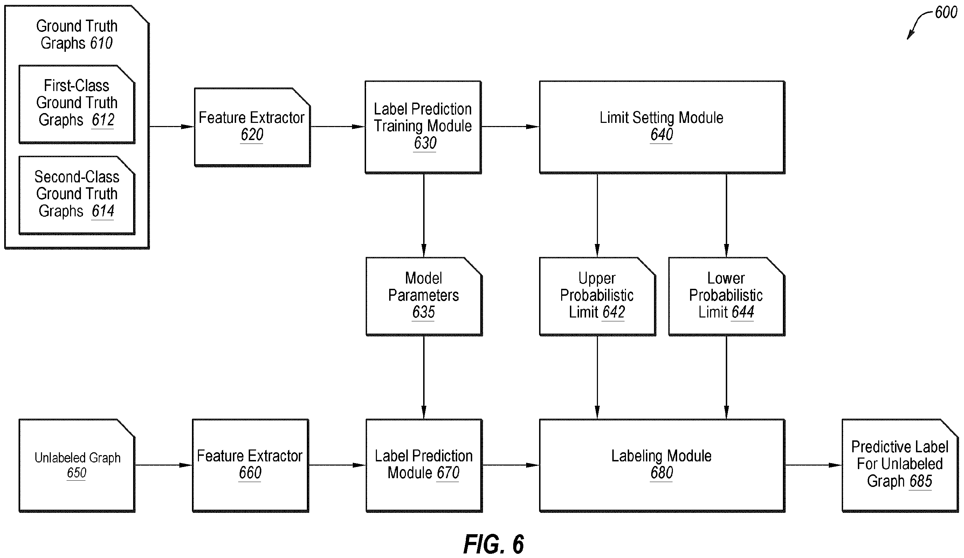

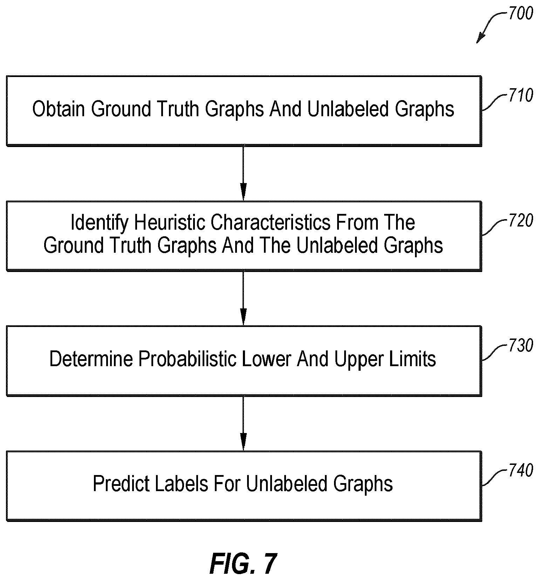

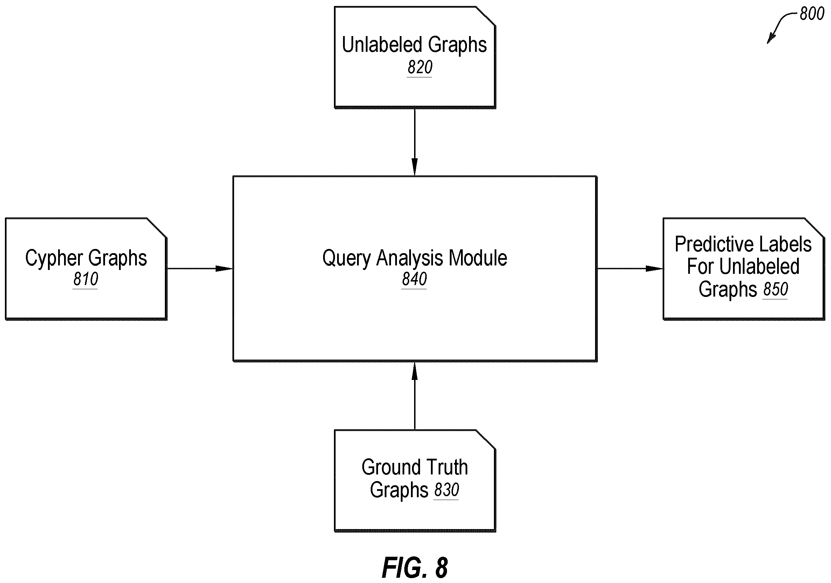

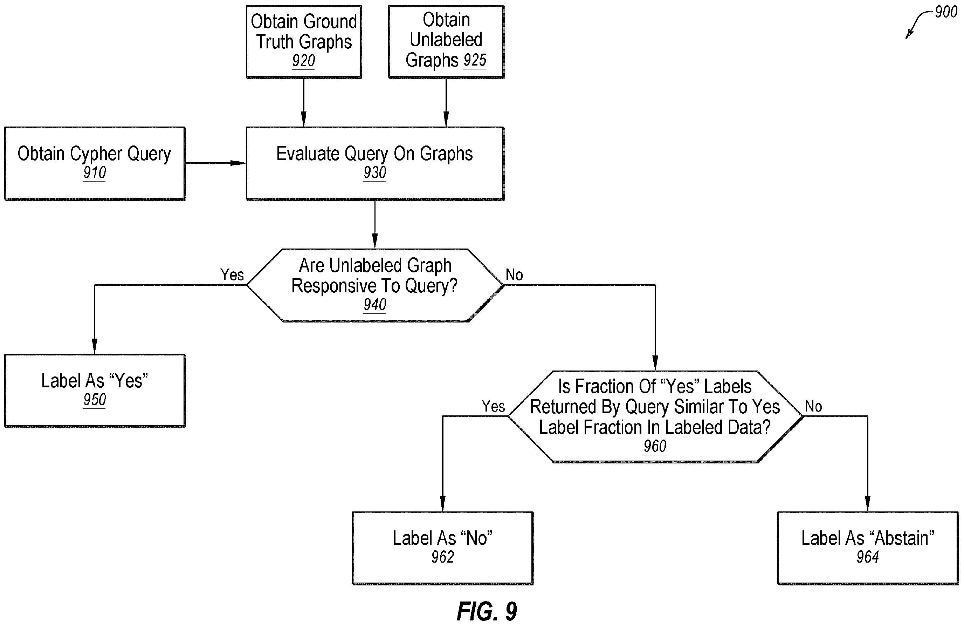

In some embodiments, the data augmenter 140 may be configured to compare an unlabeled graph 130 to the first subset of ground truth graphs and label the unlabeled graph 130 using at least one of a similarity matcher 142, a model-based heuristics module 144, or a query analysis module 146. Example embodiments and operations of the similarity matcher 142 are described in further detail below with respect to Figures 3, 4A, 4B, and 5. Example embodiments and operations of the model-based heuristics module 144 are described in further detail below with respect to Figures 6 and 7. Further, example embodiments and operations of the query analysis module 146 are described in further detail below with respect to Figures 8 and 9. The labeled graphs output by the data augmenter 140 and the first subset of the ground truth graphs 120 may be obtained by a machine learning module 150.

For example, the first subset of the ground truth graphs may include one or more first-class ground truth graphs and one or more second-class ground truth graphs. Each graph may generally describe transactions of a credit card account. Each of the one or more first-class ground truth graphs may describe transactions of a credit card account that include fraudulent transactions and may be labeled with the "Yes" label. Each of the one or more second-class ground truth graphs may describe transactions of a credit card account that does not include fraudulent transactions and may be labeled with the "No" label. The particular unlabeled graph may describe transactions of a credit card account in which the presence of fraudulent transactions is undetermined. Each graph may include one or more heuristic characteristics such as the number of self-financing loops in the credit card transactions. The number of self-financing loops may be a heuristic characteristic because a number of self-financing loops in the credit card transactions above some threshold value may be strongly correlated with the presence of fraudulent transactions. The data augmenter 140 may be configured to label the particular unlabeled graph with the "Yes" label or the "No" label by comparing the heuristic characteristic, the number of self-financing loops, of the particular unlabeled graph 130 and the same heuristic characteristic of each of the ground truth graphs in the first subset. The comparing of the shared heuristic characteristics of the particular unlabeled graph and the first subset of ground truth graphs may be facilitated by at least one of a similarity matcher 142, a model-based heuristics module 144, or a query analysis module 146.

The machine learning module 150 may include code and routines configured to enable a computing system to perform one or more operations related to training and implementing a machine learning model. Additionally or alternatively, the machine learning module 150 may be implemented using hardware including a processor, a microprocessor (e.g., to perform or control performance of one or more operations), a field-programmable gate array (FPGA), or an application-specific integrated circuit (ASIC). In some other instances, the machine learning module 150 may be implemented using a combination of hardware and software. In the present disclosure, operations described as being performed by machine learning module 150 may include operations that the machine learning module 150 may direct a corresponding system to perform. The machine learning module 150 may be configured to perform a series of operations with respect to the graphs of the graph storage 110 and the graphs obtained from data augmenter 140.

The machine learning module 150 may be trained to take an unlabeled graph as an input, such as the unlabeled graph 130, and return a labeled graph as an output. The machine learning module 150 may be trained using at least one of the second subset of ground truth graphs, the first subset of ground truth graphs obtained by the data augmenter 140, or the unlabeled graphs 130 that have been labeled by data augmenter 140. In some embodiments, the machine learning module 150 may be configured to verify the labeling accuracy of the data augmenter 140 by using the second subset of ground truth graphs as a validation dataset. Training the machine learning model 150 using at least one of the second subset of ground truth graphs, the first subset of ground truth graphs obtained by the data augmenter 140, or the previously unlabeled graphs 130 that have been labeled by data augmenter 140 may improve machine learning models. For example, a machine learning model of the machine learning module 150 may predict and generate more accurate labels for graph data because the machine learning model may obtain more training data than the machine learning model previously could have been obtained. The greater availability of training data for the machine learning model may also reduce overfitting issues that may be caused by insufficiently labeled data. Additionally, the machine learning model may predict and generate more accurate labels for imbalanced graph datasets, which may reduce probabilistic bias towards the majority class in an imbalanced graph dataset.

Modifications, additions, or omissions may be made to the system 100 without departing from the scope of the disclosure. For example, the designations of different elements in the manner described is meant to help explain concepts described herein and is not limiting. For instance, in some embodiments, the data augmenter 140, the similarity matcher 142, the model-based heuristics module 144, the Cypher-query module 146, and the machine learning module 150 are delineated in the specific manner described to help with explaining concepts described herein but such delineation is not meant to be limiting. Further, the system 100 may include any number of other elements or may be implemented within other systems or contexts than those described.

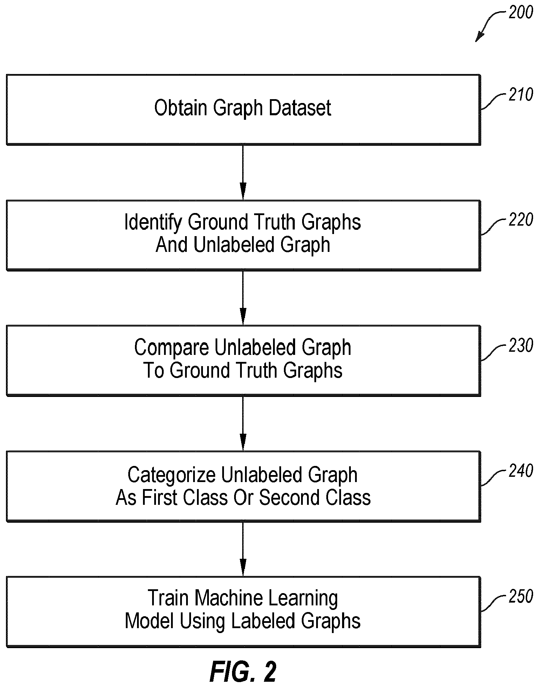

Figure 2 is a flowchart of an example method 200 of labeling an unlabeled graph to train a machine learning model according to at least one embodiment of the present disclosure. The method 200 may be performed by any suitable system, apparatus, or device. For example, the graph storage 110, the data augmenter 140, and/or the machine learning module 150 may perform one or more of the operations associated with the method 200. Although illustrated with discrete blocks, the steps and operations associated with one or more of the blocks of the method 200 may be divided into additional blocks, combined into fewer blocks, or eliminated, depending on the particular implementation.

The method 200 may begin at block 210, where one or more graph datasets may be obtained. The one or more graph datasets may be obtained from a graph storage, such as the graph storage 110 as described above with respect to Figure 1. The graph datasets may include ground truth graphs and unlabeled graphs. Additionally or alternatively, the ground truth graphs may be labeled and identified as ground truth graphs before the one or more graph datasets are obtained at block 210.

At block 220, graphs from the graph dataset may be differentiated between being ground truth graphs or unlabeled graphs. For example, the ground truth graphs may be differentiated from the unlabeled graphs based on the ground truth graphs being indicated as ground truth. Additionally or alternatively, the ground truth graphs may be differentiated from the unlabeled graphs based on whether the graphs are labeled such that graphs that are labeled are identified as ground truth graphs. In these or other embodiments, graphs that are unlabeled may be identified as unlabeled graphs. Graphs from the graph dataset that are identified as ground truth graphs may be categorized as first-class graphs or as second-class graphs at least according to the description of the graph storage 110 in relation to system 100 of Figure 1 above.

At block 230, unlabeled graphs may be compared to the ground truth graphs. Comparison of the unlabeled graphs to the ground truth graphs may be based on one or more heuristic characteristics shared by both the unlabeled graphs and the ground truth graphs. Comparison of the unlabeled graphs to the ground truth graphs may be further based on the categorization of the ground truth graphs as first-class graphs or as second-class graphs. Comparison of the unlabeled graphs to the ground truth graphs may be accomplished by at least one operation selected from a group of operations including performing similarity matching, model-based heuristics operations, or query analysis operations as described in further detail below. Any graph analysis module, such as the data augmenter 140 or the machine learning module 150 described in relation to system 100 of Figure 1, may facilitate the comparison of the unlabeled graphs to the ground truth graphs.

At block 240, labels may be predicted and assigned to the unlabeled graphs based on the comparison between the unlabeled graphs and the ground truth graphs at block 230. The unlabeled graphs may be labeled by at least one operation selected from a group of operations including performing similarity matching, model-based heuristics operations, or query analysis operations as described in further detail below. Any graph analysis module, such as the data augmenter 140 described in relation to system 100 of Figure 1, may facilitate the labeling of the unlabeled graphs.

At block 250, the labeled graphs may be used to train a machine learning model to analyze and label new graph data. The labeled graphs used to train the machine learning model may include at least one of the ground truth graphs or the unlabeled graphs that were labeled at block 240. In some embodiments, training the machine learning model may include verifying the labeling accuracy of the previously unlabeled graphs that were labeled at block 240 by using a subset of the ground truth graphs as a validation dataset.

Modifications, additions, or omissions may be made to the method 200 without departing from the scope of the disclosure. For example, the designations of different elements in the manner described is meant to help explain concepts described herein and is not limiting. Further, the method 200 may include any number of other elements or may be implemented within other systems or contexts than those described.

Figure 3 is a diagram of an example system 300 related to comparing and labeling the unlabeled graphs 350 based on operations of a similarity matcher, in accordance with one or more embodiments of the present disclosure. The system 300 is an example of the similarity matcher 142 of Figure 1 in some embodiments. The system 300 may include a classification module 320, an array module 330, a similarity function module 370, and a comparison module 390.

The modules described in relation to Figure 3 (e.g., the classification module 320, the array module 330, the similarity function module 370, and the comparison module 390) may include code and routines configured to enable a computing system to perform one or more operations. Additionally or alternatively, the modules described in relation to Figure 3 may be implemented using hardware including a processor, a microprocessor (e.g., to perform or control performance of one or more operations), a field-programmable gate array (FPGA), or an application-specific integrated circuit (ASIC). In some other instances, the modules described in relation to Figure 3 may be implemented using a combination of hardware and software. In the present disclosure, operations described as being performed by the modules described in relation to Figure 3 may include operations that the modules of Figure 3 may direct a corresponding system to perform. The modules of Figure 3 may be configured to perform a series of operations with respect to ground truth graphs 310 and unlabeled graphs 350.

The classification module 320 may be configured to obtain one or more ground truth graphs 310 and classify the ground truth graphs 310 as first-class graphs 322 or as second-class graphs 324. The classification module 320 may be configured to classify the ground truth graphs 310 as first-class graphs 322 or as second-class graphs 324 based on the labels of the ground truth graphs 310 as described above in relation to system 100 of Figure 1. The ground truth graphs 310 may include the first subset of ground truth graphs obtained for training the labeling of one or more unlabeled graphs 350. Ground truth graphs not included in the ground truth graphs 310 may not be obtained by the classification module 320 and may be identified as part of a second subset of ground truth graphs as described above in relation to system 100 of Figure 1.

The array module 330 may be configured to obtain one or more first-class ground truth graphs 322, one or more second-class ground truth graphs 324, and one or more unlabeled graphs 350 and output multi-dimensional arrays corresponding to each of the obtained graphs. Comparison of characteristics between different graphs may include comparing one or more nodes and/or one or more edges of the different graphs. Further, a multi-dimensional array may be used to represent the nodes and/or edges of a graph. Thus, determining a multi-dimensional array 340 corresponding to each of the obtained ground truth graphs 310 and a multi-dimensional array 360 corresponding to each of the obtained unlabeled graphs 350 may facilitate comparison between ground truth graphs 310 and unlabeled graphs 350.

For example, the array module 330 may be configured to determine a first multi-dimensional array corresponding to a graph of the first-class ground truth graphs 322. The array module 330 may be further configured to determine a second multi-dimensional array corresponding to a graph of the second-class ground truth graphs 324. The array module 330 may be further configured to determine a multi-dimensional array 360 corresponding to a respective unlabeled graph of the unlabeled graphs 350.

The array module 330 may be configured to determine a multi-dimensional array corresponding to each of the obtained graphs by vectorizing each of the obtained graphs. Vectorization of graphs may facilitate comparison of two or more obtained graphs by organizing characteristics and information represented by the graphs in a more comparable form. Vectorization of a particular graph may include converting characteristics of the particular graph into elements of a vector, represented by the multi-dimensional array, such that the vector of the particular graph may be compared to vectors of other graphs. Vectorization of graphs to determine multi-dimensional arrays corresponding to each of the graphs may include node tokenization, edge tokenization, or other methods of vectorizing graphs.

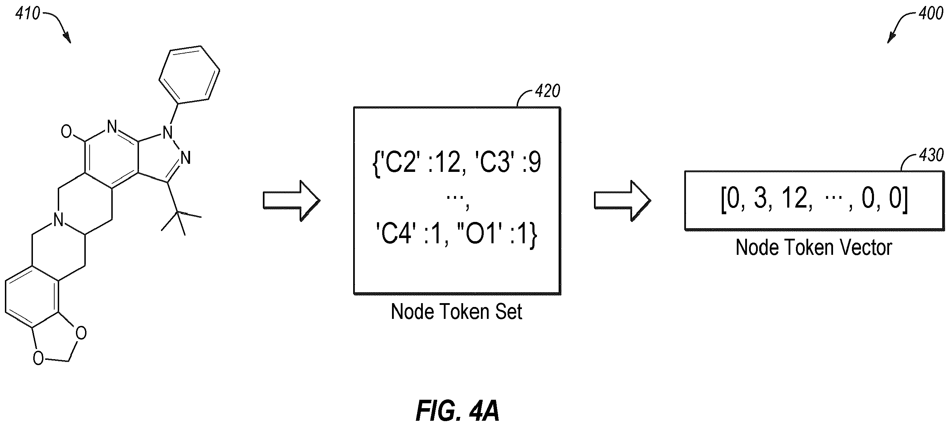

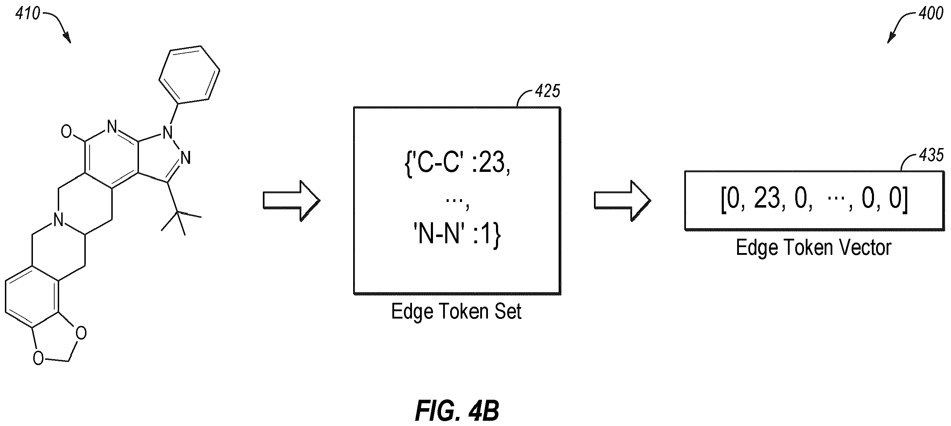

Figures 4A and 4B illustrate some examples of vectorizing a particular graph 410. The particular graph 410 represents a chemical compound in which each of the nodes of the particular graph 410 represents atoms of the compound, and each of the edges of the particular graph 410 represents bonds connecting each of the atoms. The particular graph 410 may represent a particular ground truth graph or a particular unlabeled graph.

In Figure 4A, the particular graph 410 is node tokenized, indicating the particular graph 410 is tokenized based on the nodes of the particular graph to determine a particular node token set 420. The particular node token set 420 may indicate different types of nodes present in the particular graph 410. For example, the 'C2,' 'C3,' 'C4,' and 'O1' notations depicted in the particular node token set 420 represent carbon atoms bonded to two non-hydrogen atoms (C2), carbon atoms bonded to three non-hydrogen atoms (C3), carbon atoms bonded to four non-hydrogen atoms (C4), and oxygen atoms bonded to one non-hydrogen atom (01). Additionally, the particular node token set 420 may indicate the number of occurrences for the different types of nodes in the particular graph 410. For example, the 'C2': 12, 'C3': 9, 'C4': 1, and 'O1': 1 notations depicted in the particular node token set 420 represent a presence of twelve 'C2' nodes, a presence of nine 'C3' nodes, a presence of one 'C4' node, and a presence of one 'O1' node.

The particular node token set 420 may be vectorized to create a particular node token vector 430. The particular node token vector 430 is a multi-dimensional array that represents the particular node token set 420. A node token vector may include one dimension for each type of node present in the graphs obtained by the array module 330. Thus, a node token vector may have zero occurrences of some node types represented by values of zero for some dimensions. For example, the [0, 3, 12, ..., 0, 0] notation of the particular node token vector 430 indicates zero occurrences of a first type of node as a first dimension, three occurrences of a second type of node as a second dimension, and twelve occurrences of a third type of node as a third dimension. The first dimension may represent a node type absent from the particular graph 410, such as a 'Br1' node, which may be present in another graph obtained by the array module 330.

In Figure 4B, the particular graph 410 is edge tokenized, indicating the graph 410 is tokenized based on the edges of the particular graph to determine a particular edge token set 425. The particular edge token set 425 may indicate different types of edges present in the particular graph 410. For example, the 'C-C' and 'N-N' notations depicted in the particular edge token set 425 represent a carbon atom bonded to another carbon atom (C-C) and a nitrogen atom bonded to another nitrogen atom (N-N). Additionally, the particular edge token set 425 may indicate the number of occurrences for the different types of edges in the particular graph 410. For example, the 'C-C': 23 and 'N-N': 1 notations depicted in the particular edge token set 425 represent a presence of twenty-three 'C-C' edges and a presence of one 'N-N' edge.

The particular edge token set 425 may be vectorized to create a particular edge token vector 435. The particular edge token vector 435 is a multi-dimensional array that represents the particular edge token set 425. An edge token vector may include one dimension for each type of edge present in the graphs obtained by the array module 330. Thus, an edge token vector may have zero occurrences of some edge types represented by values of zero for some dimensions. For example, the [0, 23, 0, ..., 0, 0] notation of the particular edge token vector 435 indicates zero occurrences of a first type of edge as a first dimension, twenty-three occurrences of a second type of edge as a second dimension, and zero occurrences of a third type of edge as a third dimension. The first dimension may represent an edge type not present in the particular graph 410, such as a 'Br-C' edge, which may be present in another graph obtained by the array module 330.

The array module 330 may be configured to determine a multi-dimensional array corresponding to each of the obtained graphs by calculating various scalar properties of each of the obtained graphs and representing the calculated scalar properties as a multi-dimensional array. Examples of scalar properties may include at least one of a number of nodes, a number of edges, a number of cycles, a maximum size of cycle, a number of cliques, a number of disjointed sets of nodes, a radius, a diameter, a maximum (in/out/all) degree, or a minimum (in/out/all) degree of a graph.

The array module 330 may determine a first comparison array 342 based on the multi-dimensional arrays 340 corresponding to the first-class ground truth graphs 322. In some embodiments, the first comparison array 342 may be an array concatenating the information from the one or more multi-dimensional arrays 340 corresponding to each of the first-class ground truth graphs 322 such that the comparison array represents the first-class ground truth graphs 322 in an array that may be compared to the one or more multi-dimensional arrays 360 corresponding to the each of the unlabeled graphs 350. For example, the first comparison array 342 may be a matrix of multi-dimensional arrays corresponding to the first-class ground truth graphs 322. A particular comparison array may be a vector representation of one or more multi-dimensional arrays such that each of the one or more multi-dimensional arrays is an element of the comparison array.

In these or other embodiments, the array module 330 may determine a second comparison array 344 based on the multi-dimensional arrays corresponding to the second-class ground truth graphs 324. In some embodiments, the second comparison array 344 may be an array concatenating the information from the one or more multi-dimensional arrays 340 corresponding to each of the second-class ground truth graphs 324 such that the comparison array represents the second-class ground truth graphs 324 in a an array that may be compared to the one or more multi-dimensional arrays 360 corresponding to the each of the unlabeled graphs 350. For example, the second comparison array 344 may be a matrix of multi-dimensional arrays corresponding to the second-class ground truth graphs 324.

The similarity function module 370 may be configured to compare a multi-dimensional array 360 corresponding to a particular unlabeled graph to the first comparison array 342 and the second comparison array 344. The similarity function module 370 may be configured to compare the multi-dimensional array 360 to a comparison array using vector-based similarity functions in instances in which the comparison array is made up of multi-dimensional arrays that were determined via edge tokenization or node tokenization as described above in relation to Figures 4A and 4B. The similarity function module 370 may be configured to compare the multi-dimensional array 360 to the vector-based comparison array using any suitable similarity functions including at least one of a Jaccard similarity, a cosine similarity, a Euclidean similarity, a Bray-Curtis similarity, a Canberra distance, a Chebyshev distance, a Manhattan distance, a Minkowski distance, and a square Euclidean distance. The similarity function module 370 may be configured to compare the multi-dimensional array 360 to a comparison array using scalar-based similarity functions in instances in which the comparison array is made up of multi-dimensional arrays that were determined based on calculating scalar properties of the obtained graphs as described in further detail above. The similarity function module 370 may be configured to compare the multi-dimensional array 360 to the scalar-based comparison array using similarity functions including at least one of an equality comparison, a greater-than/less-than comparison, or an absolute value greater-than/less-than comparison.

The similarity function module 370 may be configured to return a first similarity score 380 based on the comparison between the multi-dimensional array 360 associated with an unlabeled graph 350 and the first comparison array 342. The first similarity score 380 may represent a degree of similarity between the unlabeled graph 350 and the first comparison array 342. The first similarity score 380 may be compared to other similarity scores, such as a second similarity score 385, representing a degree of similarity between the unlabeled graph 350 and other comparison arrays, such as the second comparison array 344. Additionally or alternatively, the similarity function module 370 may be configured to return a second similarity score 385 based on the comparison between the multi-dimensional array 360 associated with an unlabeled graph 350 and the second comparison array 344. In some embodiments, the first similarity score 380 and the second similarity score 385 may be normalized values based on the similarity functions used by the similarity function module 370 to compare multi-dimensional arrays to comparison arrays. For example, a similarity score for a particular multi-dimensional array-comparison array pair may be in a range of 0 to 1 with a value approaching 1 indicating greater similarity approaching equality of the multi-dimensional array and the comparison array.

The comparison module 390 may be configured to label each of the unlabeled graphs 350 such that each of the unlabeled graphs 350 may be categorized as a first-class graph or as a second-class graph based on the similarity scores associated with each of the unlabeled graphs 350. For example, the comparison module 390 may be configured to compare the first similarity score 380 and the second similarity score 385 output by the similarity function module 370 for each of the unlabeled graphs 350. In some embodiments, the comparison module 390 may be configured to assign a predictive label 395 corresponding to first-class graphs to each of the unlabeled graphs 350 in which a comparison between the first similarity scores 380 and the second similarity scores 385 indicates more similarity to the first class than the second class. In these and other embodiments, the comparison module 390 may be configured to assign a predictive label 395 corresponding to second-class graphs to each of the unlabeled graphs 350 in which a comparison between the first similarity scores 380 and the second similarity scores 385 indicates more similarity to the second class than the first class.

Modifications, additions, or omissions may be made to the system 300 without departing from the scope of the disclosure. For example, the designations of different elements in the manner described is meant to help explain concepts described herein and is not limiting. For instance, in some embodiments, the classification module 320, the array module 330, the similarity function module 370, and the comparison module 390 are delineated in the specific manner described to help with explaining concepts described herein but such delineation is not meant to be limiting. Further, the system 300 may include any number of other elements or may be implemented within other systems or contexts than those described.

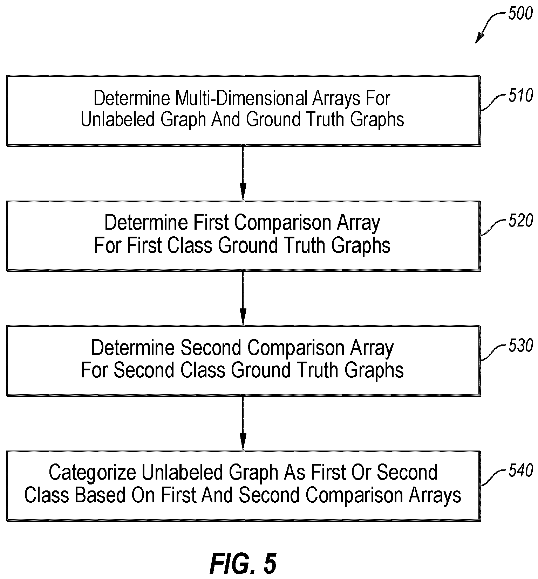

Figure 5 is a flowchart of an example method 500 of labeling an unlabeled graph using a similarity matcher according to at least one embodiment of the present disclosure. The method 500 may be performed by any suitable system, apparatus, or device. For example, the system 300 including the classification module 320, the array module 330, the similarity function module 370, and the comparison module 390 may perform one or more of the operations associated with the method 500. Although illustrated with discrete blocks, the steps and operations associated with one or more of the blocks of the method 500 may be divided into additional blocks, combined into fewer blocks, or eliminated, depending on the particular implementation.

The method 500 may begin at block 510 where multi-dimensional arrays for unlabeled graphs and multi-dimensional arrays for ground truth graphs are determined. For each unlabeled graph, a multi-dimensional array may be determined as described in further detail above with respect to Figure 3. For each ground truth graph, a multi-dimensional array may be determined as described in further detail above with respect to Figure 3. The multi-dimensional arrays may be vector arrays determined via node tokenization or edge tokenization as described in further detail above with respect to Figures 4A and 4B. Additionally or alternatively, the multi-dimensional arrays may be arrays of scalar properties of each of the ground truth graphs.

At block 520, a first comparison array corresponding to ground truth graphs categorized as first-class graphs may be determined. The first comparison array may be a matrix of multi-dimensional arrays corresponding to ground truth graphs categorized as first-class graphs.

At block 530, a second comparison array corresponding to ground truth graphs categorized as second-class graphs may be determined. The second comparison array may be a matrix of multi-dimensional arrays corresponding to ground truth graphs categorized as second-class graphs.

At block 540, unlabeled graphs may be labeled based on the first comparison array and the second comparison array. The multi-dimensional arrays corresponding to the unlabeled graphs determined at block 510 may be compared to the first comparison array determined at block 520 and the second comparison array determined at block 530 as described in further detail above in relation to Figure 3. The unlabeled graphs may be labeled based on the comparison of the multi-dimensional arrays corresponding to the unlabeled graphs to the first comparison array and the second comparison array as described in further detail above in relation to Figure 3.

Modifications, additions, or omissions may be made to the method 500 without departing from the scope of the disclosure. For example, the designations of different elements in the manner described is meant to help explain concepts described herein and is not limiting. Further, the method 500 may include any number of other elements or may be implemented within other systems or contexts than those described.

Figure 6 is a diagram of an example system 600 related to comparing and labeling the unlabeled graphs 650 based on operations of a model-based heuristics module, in accordance with one or more embodiments of the present disclosure. The system 600 may be an example of the model-based heuristics module of Figure 1. The system 600 may include a first feature extractor 620, a label prediction training module 630, a limit setting module 640, a second feature extractor module 660, a label prediction module 670, and a labeling module 680.

The first feature extractor 620 may include code and routines configured to enable a computing system to perform one or more operations. Additionally or alternatively, the first feature extractor 620 may be implemented using hardware including a processor, a microprocessor (e.g., to perform or control performance of one or more operations), a field-programmable gate array (FPGA), or an application-specific integrated circuit (ASIC). In some other instances, the first feature extractor 620 may be implemented using a combination of hardware and software. In the present disclosure, operations described as being performed by the first feature extractor 620 may include operations that the first feature extractor 620 may direct a corresponding system to perform. The first feature extractor 620 may be configured to perform a series of operations with respect to ground truth graphs 610, including first-class ground truth graphs 612 and second-class ground truth graphs 614.

The first feature extractor 620 may be configured to obtain one or more ground truth graphs 610 including one or more first-class graphs 612 and one or more second-class graphs 614. The first feature extractor 620 may be configured to output, for each ground truth graph, one or more values representing one or more characteristics of the corresponding ground truth graph. The characteristics of the ground truth graph from which the one or more values are extracted by the first feature extractor 620 may include heuristic characteristics of the ground truth graph. The label training module 630 may be configured to obtain the one or more characteristic values and each of the ground truth graphs 610 corresponding to each of the one or more characteristic values obtained from the first feature extractor 620 and an indication categorizing each of the ground truth graphs 610 as first-class ground truth graphs 612 or second-class ground truth graphs 614.

The label prediction training module 630 may include code and routines configured to enable a computing system to perform one or more operations. Additionally or alternatively, the label prediction training module 630 may be implemented using hardware including a processor, a microprocessor (e.g., to perform or control performance of one or more operations), a field-programmable gate array (FPGA), or an application-specific integrated circuit (ASIC). In some other instances, the label prediction training module 630 may be implemented using a combination of hardware and software. In the present disclosure, operations described as being performed by the label prediction training module 630 may include operations that the label prediction training module 630 may direct a corresponding system to perform. The label prediction training module 630 may be configured to perform a series of operations with respect to the ground truth graphs 610 and/or the values obtained from the first feature extractor 620.

The label prediction training module 630 may be configured to determine model parameters 635 based on the ground truth graphs 610 and each of the characteristic values obtained from the first feature extractor 620 corresponding to each of the ground truth graphs 610. The model parameters 635 may represent the configuration of a machine learning model trained to categorize the characteristic values obtained from the first feature extractor 620. The label prediction training module 630 may be configured to determine a prediction probability between 0 and 1 based on a characteristic value of a heuristic characteristic and the model parameters 635. In some embodiments, the label prediction training module 630 may be configured to determine the prediction probability using a single variable regression model. For example, the single variable regression model may be determined based on a linear regression formula, such as *y*=*Ax*+*B*, to output the prediction probability based on each of the characteristic values obtained from label prediction training module 620 corresponding to each of the ground truth graphs 610. In these and other embodiments, the model parameters 635 may include the parameter values from the linear regression formula, such as A and B from the *y*=*Ax*+*B* formula. In some embodiments, the label prediction training module 630 may be configured to determine the prediction probability using any suitable technique.

The limit setting module 640 may include code and routines configured to enable a computing system to perform one or more operations. Additionally or alternatively, the limit setting module 640 may be implemented using hardware including a processor, a microprocessor (e.g., to perform or control performance of one or more operations), a field-programmable gate array (FPGA), or an application-specific integrated circuit (ASIC). In some other instances, the limit setting module 640 may be implemented using a combination of hardware and software. In the present disclosure, operations described as being performed by the limit setting module 640 may include operations that the limit setting module 640 may direct a corresponding system to perform. The limit setting module 640 may be configured to perform a series of operations with respect to the prediction probabilities obtained from the label predication training module 630.

The limit setting module 640 may be configured to predict an upper probabilistic limit 642 based on the prediction probability obtained from the label prediction training module 630. Additionally or alternatively, the limit setting module 640 may be configured to predict a lower probabilistic limit 644 based on the prediction probability obtained from the label prediction training module 630. Additionally or alternatively, the limit setting module 640 may be configured to predict the lower probabilistic limit 644 based on the upper probabilistic limit 642 predicted by the limit setting module 640. For example, the limit setting module 640 may determine a particular upper probabilistic limit to be 0.8 based on the prediction probability being greater than or equal to 0.8 for a particular set of ground truth graphs being categorized as first-class ground truth graphs. The limit setting module 640 may determine a particular lower probabilistic limit to be 0.2 based on the particular upper probabilistic limit being 0.8.

In some embodiments, the limit setting module 640 may be configured to predict the upper probabilistic limit 642 and the lower probabilistic limit 644 based on an iterative approach. The limit setting module 640 may initialize a value for the lower probabilistic limit 635 as the minimum value of a heuristic characteristic for the one or more second-class graphs 614. The limit setting module 640 may initialize a value for the upper probabilistic limit 630 as the maximum value of the heuristic characteristic for the one or more first-class graphs 612. The limit setting module 640 may determine an adjustment value by which the initialized lower probabilistic limit may be incremented and by which the initialized upper probabilistic limit may be decremented. In some embodiments, the adjustment value may be determined such that the lower probabilistic limit may be incremented a set number of times and the upper probabilistic limit may be decremented the same set number of times based on a particular iteration count. The particular iteration count may represent the number of times the lower probabilistic limit and the upper probabilistic limit may be iteratively incremented or decremented, respectively, before the lower probabilistic limit and the upper probabilistic limit are equivalent. In these and other embodiments, a user may determine the adjustment value and/or the particular iteration count. For example, a particular adjustment value may be determined to be 1 responsive to a particular lower probabilistic limit being 0, a particular upper probabilistic limit being 10, and a particular iteration count being 5; after five iterations, the particular lower probabilistic limit and the particular upper probabilistic limit would be equivalent.

The second feature extractor 660 may include code and routines configured to enable a computing system to perform one or more operations. Additionally or alternatively, the second feature extractor 660 may be implemented using hardware including a processor, a microprocessor (e.g., to perform or control performance of one or more operations), a field-programmable gate array (FPGA), or an application-specific integrated circuit (ASIC). In some other instances, the second feature extractor 660 may be implemented using a combination of hardware and software. In the present disclosure, operations described as being performed by the second feature extractor 660 may include operations that the second feature extractor 660 may direct a corresponding system to perform. The second feature extractor 660 may be configured to perform a series of operations with respect to the unlabeled graphs 650.

The second feature extractor 660 may be configured in the same or a similar manner as the first feature extractor 620. The second feature extractor 660 may be configured to output, for each unlabeled graph 650, one or more values representing characteristics of the unlabeled graph 650. The characteristics of the unlabeled graph 650 from which the one or more values are extracted by the second feature extractor 660 may include heuristic characteristics of the unlabeled graph 650.

The label prediction module 670 may include code and routines configured to enable a computing system to perform one or more operations. Additionally or alternatively, the label prediction module 670 may be implemented using hardware including a processor, a microprocessor (e.g., to perform or control performance of one or more operations), a field-programmable gate array (FPGA), or an application-specific integrated circuit (ASIC). In some other instances, the label prediction module 670 may be implemented using a combination of hardware and software. In the present disclosure, operations described as being performed by the label prediction module 670 may include operations that the label prediction module 670 may direct a corresponding system to perform. The label prediction module 670 may be configured to perform a series of operations with respect to the unlabeled graphs 650 and/or the characteristic values obtained from the second feature extractor 660.

The label prediction module 670 may be configured to obtain as inputs the characteristic values from the second feature extractor 660 and the model parameters 635. In some embodiments, the label prediction module 670 may be configured to output a probability value between 0 and 1 inclusive for each characteristic value obtained from the second feature extractor 660 based on the model parameters 635.

The labeling module 680 may include code and routines configured to enable a computing system to perform one or more operations. Additionally or alternatively, the labeling module 680 may be implemented using hardware including a processor, a microprocessor (e.g., to perform or control performance of one or more operations), a field-programmable gate array (FPGA), or an application-specific integrated circuit (ASIC). In some other instances, the label prediction module 670 may be implemented using a combination of hardware and software. In the present disclosure, operations described as being performed by the labeling module 680 may include operations that the labeling module 680 may direct a corresponding system to perform. The labeling module 680 may be configured to perform a series of operations with respect to the probability values obtained from the label prediction model 670.

In some embodiments, the labeling module 680 may be configured to categorize each unlabeled graph 650 based on the characteristic value corresponding to the unlabeled graph 650 obtained from the label prediction module 670 as a first-class graph or as a second-class graph. In these and other embodiments, the labeling module 680 may be configured to categorize the unlabeled graphs 650 based on comparing the probability values obtained from the label prediction module 670 corresponding to each unlabeled graph 650 to the lower probabilistic limit 644 and the upper probabilistic limit 642 obtained from the limit setting module 640. In some embodiments, responsive to the probability value of a particular unlabeled graph being greater than or equal to the upper probabilistic limit 642, the particular unlabeled graph may be categorized as a first-class graph (e.g., "Yes"). In some embodiments, responsive to the probability value of a particular unlabeled graph being less than or equal to the lower probabilistic limit 644, the particular unlabeled graph is categorized as a second-class graph (e.g., "No"). In these and other embodiments, responsive to the probability value of a particular unlabeled graph being between greater than the lower probabilistic limit 644 and less than the upper probabilistic limit 642, the particular unlabeled graph is labeled as a third-class graph (e.g., "Abstain").

In some embodiments, at least one of the second feature extractor 660, the label prediction module 670, or the labeling module 680 may be configured to test the accuracy and coverage of the model parameters 635, the upper probabilistic limit 642, or the lower probabilistic limit 644. For example, the accuracy of the obtained probabilistic limits may be determined by having the second feature extractor 660 obtain a particular subset of the ground truth graphs 610, such as the second subset of ground truth graphs described in relation to Figure 1, and having the label prediction module 670 and the labeling module 680 analyze the particular subset of ground truth graphs. The accuracy of the upper probabilistic limit 642 and the accuracy of the lower probabilistic limit 644 may be determined by calculating a percentage of the particular subset of ground truth graphs that the labeling module 680 correctly categorized relative to the total number of graphs categorized. The labeling module 680 may test the coverage of the upper probabilistic limit 642 and the lower probabilistic limit 644 by applying the second feature extractor 660, the label prediction module 670, and the labeling module 680 to a particular subset of the ground truth graphs 610 or to a particular set of the unlabeled graphs 650. In these and other embodiments, the coverage of the upper probabilistic limit 642 and the coverage of the lower probabilistic limit 644 may be determined by calculating a percentage of the particular subset of ground truth graphs or of the particular set of unlabeled graphs that the labeling module 680 categorized as first-class graphs or second-class graphs relative to the total number of graphs categorized.

An example of operations performed by system 600 may include obtaining a graph dataset relating to financial transactions on point-of-sales devices. A topic of interest regarding the graph dataset may be whether fraudulent transactions exist on the point-of-sales devices. Ground truth graphs may include graphs in which the presence of fraudulent transactions has been determined. First-class ground truth graphs may include graphs in which the presence of fraudulent transactions has been confirmed, while second-class ground truth graphs may include graphs in which the absence of fraudulent transactions has been confirmed. A heuristic characteristic may be a distribution of transactions over a plurality of point-of-sales devices within a three month time period. For first-class graphs in which fraudulent transactions are present, the distribution of transactions may be concentrated on a subset of a total number of point-of-sales devices. For second-class graphs in which fraudulent transactions are absent, the distribution of transactions may be distributed over the total number of point-of-sales devices. The distribution of transactions may be represented by a percentage indicating a subset of transactions of the total number of transactions directed to a point-of-sales device. For example, a percentage of eighty percent for a particular point-of-sales device may represent that eighty percent of transactions of the total number of transactions are directed to the particular point-of-sales device.

In the foregoing example, the heuristic characteristic is identified in each graph by the first feature extractor 620. More specifically, the first feature extractor 620 determined the heuristic characteristic to be the highest percentage of the total transactions an individual point-of-sale device may receive in a graph. The label training module 630 may be configured to implement a single variable regression model *y*=*Ax*+*B* to output a probability value based on the value of the heuristic characteristic determined by the first feature extractor 620. Parameters of the single variable regression model may be returned by the label training module 630 as model parameters 635. The limit setting module 640 may be configured to then assign the upper probabilistic limit 642 and the lower probabilistic limit 644 to maximize the accuracy and coverage of the labels over ground truth graph 612 and 614. For example, a particular lower probabilistic limit of 0.2 and a particular upper probabilistic limit of 0.8 may be determined by the label training module 630.

For example, responsive to a particular unlabeled graph representing financial transactions being presented to the second feature extractor 660, the heuristic characteristic may be identified in the same approach or by a similar approach as described in relation to the first feature extractor 620. The heuristic characteristic returned by the second feature extractor 660, the highest percentage of the total transactions an individual point-of-sale device receives in the particular unlabeled graph, may be obtained by the label prediction module 670. Assuming a highest percentage value of 80%, the label prediction module 670 may apply particular model parameters determined by the label prediction training module 630 to the highest percentage value of 80%. In this example, the model parameters may be determined for a single variable linear model which returns a probability value of 0.9. The probability value returned by the label prediction module 670 may be obtained by the labeling module 680. The labeling module 680 may be configured to compare the probability value, 0.9, to a particular upper probabilistic limit, 0.8. In this example, the labeling module 680 may be configured to return a "Yes" label and categorize the particular unlabeled graph as a first-class graph because the probability value is greater than the particular upper probabilistic limit.

Modifications, additions, or omissions may be made to the system 600 without departing from the scope of the disclosure. For example, the designations of different elements in the manner described is meant to help explain concepts described herein and is not limiting. For instance, in some embodiments, the first feature extractor 620, the label prediction training module 630, the limit setting module 640, the second feature extractor 660, the label prediction module 670, and the labeling module 680 are delineated in the specific manner described to help with explaining concepts described herein but such delineation is not meant to be limiting. Further, the system 600 may include any number of other elements or may be implemented within other systems or contexts than those described.

Figure 7 is a flowchart of an example method 700 of labeling an unlabeled graph using model-based heuristics operations according to at least one embodiment of the present disclosure. The method 700 may be performed by any suitable system, apparatus, or device. For example, the system 600 including the first feature extractor 620, the label prediction training module 630, limit setting module 640, the second feature extractor 660, the label prediction module 670, and the labeling module 680 may perform one or more of the operations associated with the method 700. Although illustrated with discrete blocks, the steps and operations associated with one or more of the blocks of the method 700 may be divided into additional blocks, combined into fewer blocks, or eliminated, depending on the particular implementation.

The method 700 may begin at block 710 where ground truth graphs and unlabeled graphs may be obtained. The ground truth graphs and the unlabeled graphs may be obtained from one or more graph datasets. The one or more graph datasets may be obtained from a graph storage, such as the graph storage 110 as described above with respect to Figure 1.

At block 720, heuristic characteristics of the ground truth graphs and the unlabeled graphs may be identified. In some embodiments, the heuristic characteristics may be identified by a user. In some embodiments, the heuristic characteristics may be iteratively identified. For example, a particular set of ground truth graphs and unlabeled graphs may have five characteristics. Each of the five characteristics may be iteratively processed according to blocks 730 and 740 to determine a set upper probabilistic limit and a set lower probabilistic limit for each of the five characteristics. The characteristic with the set probabilistic limits that yield an accuracy within a particular range and/or a coverage within a particular range may be identified as a heuristic characteristic. In these and other embodiments, one or more heuristic characteristics may be iteratively identified.

At block 730, an upper probabilistic limit and a lower probabilistic limit may be determined. The upper probabilistic limit and the lower probabilistic limit may be determined such as described above with respect to the limit setting module 640 described in further detail above with respect to Figure 6.

At block 740, labels for the unlabeled graphs may be predicted. The labels for the unlabeled graphs may be predicted such as described above with respect to the label prediction module 670 described in further detail above with respect to Figure 6.

Modifications, additions, or omissions may be made to the method 700 without departing from the scope of the disclosure. For example, the designations of different elements in the manner described is meant to help explain concepts described herein and is not limiting. Further, the method 700 may include any number of other elements or may be implemented within other systems or contexts than those described.

Figure 8 is a diagram of an example system 800 related to comparing and labeling the unlabeled graphs 820 based on operations of a query analysis module, in accordance with one or more embodiments of the present disclosure. The system 800 may include a query analysis module 840, which may be an example of the query analysis module 146 of Figure 1.

The query analysis module 840 may include code and routines configured to enable a computing system to perform one or more operations. Additionally or alternatively, the query analysis module 840 may be implemented using hardware including a processor, a microprocessor (e.g., to perform or control performance of one or more operations), a field-programmable gate array (FPGA), or an application-specific integrated circuit (ASIC). In some other instances, the query analysis module 840 may be implemented using a combination of hardware and software. In the present disclosure, operations described as being performed by the query analysis module 840 may include operations that the query analysis module 840 may direct a corresponding system to perform. The query analysis module 840 may be configured to perform a series of operations with respect to a Cypher query 810, unlabeled graphs 820, and ground truth graphs 830.

The query analysis module 840 may be configured to obtain a Cypher query 810, one or more unlabeled graphs 820, and one or more ground truth graphs 830. The Cypher query 810 may be any query that may categorize graph data as first-class graphs or as second-class graphs based on the responsiveness of the graph data to the query. In some embodiments, a Cypher query 810 may be a query determined based on a previous categorization of the ground truth graphs 830 as first-class graphs or as second-class graphs such that the Cypher query 810 returns a subset of the ground truth graphs 830 corresponding to the first-class graphs. In these and other embodiments, a Cypher query 810 may be a query determined based on a previous categorization of the ground truth graphs 830 as first-class graphs or as second-class graphs such that the Cypher query 810 returns a subset of the ground truth graphs 830 corresponding to the second-class graphs. In some embodiments, the Cypher query 810 may be applicable to the ground truth graphs 830 and/or the unlabeled graphs 820. The Cypher query 810 may query graphs including nodes related to one or more specified heuristic characteristic. The Cypher query 810 may query graphs including nodes related to a specified heuristic characteristic having a specified value.

For example, a particular Cypher query may query a set of one hundred ground truth graphs related to point-of-sales transactions requesting all graphs that include a node indicating the presence of a point-of-sales device having sixty percent or more of the total number of transactions over a three-month period. The particular Cypher query may return five graphs such that the returned graphs include a node indicating the presence of a point-of-sales device having sixty percent or more of the total number of transactions. The ninety-five graphs not returned by the particular Cypher query may have zero point-of-sales devices having sixty percent or more of the total number of transactions. The results of the particular Cypher query may facilitate categorization of the graphs as first-class graphs or as second-class graphs. The five graphs returned by the particular Cypher query may be categorized as first-class graphs, and the ninety-five graphs not returned by the particular Cypher query may be categorized as second-class graphs. Additionally or alternatively, the five graphs returned by the particular Cypher query may be categorized as second-class graphs, and the ninety-five graphs not returned by the particular Cypher query may be categorized as first-class graphs.

The query analysis module 840 may be configured to output predictive labels 850 for the unlabeled graphs 820 based on the responsiveness of the ground truth graphs 830 to the Cypher query 810. The query analysis module 840 may be configured to apply a Cypher query 810 to the ground truth graphs 830 to determine a responsiveness of the ground truth graphs 830 to the Cypher query 810. The Cypher query 810 may be determined based on previous categorization of the ground truth graphs 830 as first-class graphs or as second-class graphs. The query analysis module 840 may be configured to then apply the same Cypher query 810 to the unlabeled graphs 820 to determine a responsiveness of the unlabeled graphs 820 to the Cypher query 810. The query analysis module 840 may be configured to categorize the unlabeled graphs 820 as first-class graphs or as provisional second-class graphs based on the responsiveness of the unlabeled graphs 820 to the Cypher query 810. The query analysis module 840 may be configured to compare the previously unlabeled graphs 820 categorized as first-class graphs to the ground truth graphs 830 categorized as first-class graphs. The query analysis module 840 may be configured to categorize the provisionally categorized, previously unlabeled graphs 820 as second-class graphs or as third-class graphs based on the above comparison between the first-class, previously unlabeled graphs and the first-class ground truth graphs as discussed in further detail below with respect to Figure 9.

Modifications, additions, or omissions may be made to the system 800 without departing from the scope of the present disclosure. For example, the designations of different elements in the manner described is meant to help explain concepts described herein and is not limiting. For instance, in some embodiments, the query analysis module 840 is delineated in the specific manner described to help with explaining concepts described herein but such delineation is not meant to be limiting. Further, the system 800 may include any number of other elements or may be implemented within other systems or contexts than those described.

Figure 9 is a flowchart of an example method 900 of labeling an unlabeled graph using query analysis operations according to at least one embodiment of the present disclosure. The method 900 may be an embodiment of the present disclosure in which graphs may be categorized as one of three classes. Graphs may be categorized as first-class graphs labeled with a "Yes" label as illustrated at block 950. Additionally or alternatively, graphs may be categorized as second-class graphs labeled with a "No" label as illustrated at block 962. In these or other embodiments, graphs may be categorized as third-class graphs labeled with an "Abstain" label as illustrated at block 964. The method 900 may be performed by any suitable system, apparatus, or device. For example, the system 800 including the query analysis module 840 may perform one or more of the operations associated with the method 900. Although illustrated with discrete blocks, the steps and operations associated with one or more of the blocks of the method 900 may be divided into additional blocks, combined into fewer blocks, or eliminated, depending on the particular implementation.

The method 900 may begin at block 910, where a Cypher query may be obtained. The Cypher query may be any query capable of querying a graph dataset, such as the Cypher queries described in further detail with respect to system 800 in Figure 8. In some embodiments, the Cypher query may be generated by a user. Additionally or alternatively, the Cypher query may be a predetermined query obtained from an existing application, such as a business application. Additionally or alternatively, the Cypher query may be generated by any modules, such as the data augmenter 140 and/or the graph machine learning module 150 described in further detail above with respect to system 100 in Figure 1.

At block 920, ground truth graphs may be obtained. The ground truth graphs may be obtained from a graph storage, such as the graph storage 110 described in further detail above with respect to system 100 in Figure 1. The ground truth graphs may be obtained by a data augmenter, such as the data augmenter 140 in system 100. The ground truth graphs may be obtained by a query analysis module, such as the query analysis module 840 in system 800. At block 925, unlabeled graphs may be obtained. The unlabeled graphs may be obtained from a graph storage by a data augmenter or by a query analysis module in the same or a similar manner as the ground truth graphs are obtained.

At block 930, a Cypher query may be evaluated on the ground truth graphs obtained at block 920. Evaluation of the Cypher query on the ground truth graphs may include categorizing the ground truth graphs based on the responsiveness of the ground truth graphs to the Cypher query. The ground truth graphs may be categorized based on the responsiveness of the ground truth graphs to the Cypher query, such as described above with respect to the query analysis module 840 of system 800 in Figure 8.

At block 940, the Cypher query may be evaluated on the unlabeled graphs obtained at block 925. Whether the unlabeled graphs are responsive to the Cypher query may be determined. The unlabeled graphs may be categorized or provisionally categorized based on the responsiveness of the unlabeled graphs to the Cypher query. Provisional categorization of an unlabeled graph may indicate the categorization of the unlabeled graph may be dependent on a comparison between the responsiveness of the unlabeled graphs to the Cypher query and the responsiveness of the ground truth graphs to the Cypher query as described in further detail with respect to blocks 960, 962, and 964. In some embodiments, unlabeled graphs responsive to the Cypher query may be categorized as first-class graphs. In these and other embodiments, unlabeled graphs unresponsive to the Cypher query may be provisionally categorized as provisional second-class graphs. The unlabeled graphs may be provisionally categorized such as described above with respect to the query analysis module 840 of system 800 in Figure 8.

Block 950 may illustrate an embodiment of the present disclosure in which graphs categorized as first-class graphs may be graphs labeled with a "Yes" label. At block 950, categorization of a particular unlabeled graph as a first-class graph may indicate that the particular unlabeled graph is responsive to the Cypher query. Unlabeled graphs categorized as first-class graphs may be labeled with the "Yes" label indicating the unlabeled graphs are responsive to the Cypher query.

At block 960, a percentage of the unlabeled graphs responsive to the Cypher query may be calculated. In some embodiments, the percentage of the unlabeled graphs responsive to the Cypher query may be calculated as the number of unlabeled graphs categorized as first-class graphs divided by the total number of unlabeled graphs. For example, a particular percentage of the unlabeled graphs responsive to a particular Cypher query may be 40% in instances in which twenty unlabeled graphs are categorized as first-class graphs out of a total of fifty unlabeled graphs. A percentage of the ground truth graphs responsive to the Cypher query may also be calculated. In some embodiments, the percentage of the ground truth graphs responsive to the Cypher query may be calculated as the number of ground truth graphs categorized as first-class graphs divided by the total number of ground truth graphs.

At block 960, the percentage of the ground truth graphs responsive to the Cypher query may be compared to the percentage of the unlabeled graphs responsive to the Cypher query. In response to the percentage of the ground truth graphs responsive to the Cypher query being similar to the percentage of the unlabeled graphs responsive to the Cypher query, the method 900 may proceed to block 962 where the unlabeled graphs unresponsive to the Cypher query provisionally categorized as provisional second-class graphs may be formally categorized as second-class graphs. Whether the percentage of the ground truth graphs responsive to the Cypher query is similar to the percentage of the unlabeled graphs responsive to the Cypher query may be determined based on a set variance range as described in further detail below. In the embodiment illustrated in Figure 9, the graphs categorized as second-class graphs at block 962 may be labeled with the "No" label indicating the graphs are unresponsive to the Cypher query. In response to the percentage of the ground truth graphs responsive to the Cypher query is not similar to the percentage of the unlabeled graphs responsive to the Cypher query, the method 900 may proceed to block 964 where the unlabeled graphs unresponsive to the Cypher query provisionally categorized as provisional second-class graphs may be formally categorized as third-class graphs. In the embodiment illustrated in Figure 9, the graphs categorized as third-class graphs at block 964 may be labeled with the "Abstain" label indicating the graphs appear to be unresponsive to the Cypher query but further analysis or querying may ensure accurate categorization of the graphs. In this embodiment, a particular graph labeled with the "Abstain" label may be returned to the graph dataset from which the particular graph was obtained. In these and other embodiments, the particular graph may be relabeled and recategorized at a later time using a different Cypher query or a different method of labeling and categorization.

In some embodiments, a similarity between a percentage of the ground truth graphs responsive to the Cypher query and a percentage of the unlabeled graphs responsive to the Cypher query may be determined based on a set variance range. In some embodiments, the set variance range may be determined by a user. For example, a particular percentage of the ground truth graphs responsive to the Cypher query may be 40%, and a particular percentage of the unlabeled graphs responsive to the Cypher query may be 45%. In instances in which the set variance range is 10%, then the percentage of the ground truth graphs responsive to the Cypher query and the percentage of the unlabeled graphs responsive to the Cypher query may be similar. In some embodiments, the set variance range may be a variance range determined by a user based on the percentage of the ground truth graphs responsive to the Cypher query. For example, a particular percentage of the ground truth graphs responsive to the Cypher query may be 40%, and a set variance range is 10% of the responsiveness of the ground truth graphs to the Cypher query. In this example, a particular percentage of the unlabeled graphs responsive to the Cypher query must be between 36% and 44% to be considered similar. In some embodiments, determining the percentage of the ground truth graphs responsive to the Cypher query and the percentage of the unlabeled graphs responsive to the Cypher query are similar may include determining the two percentages to be equivalent. For example, a particular percentage of the ground truth graphs responsive to the Cypher query may be 40%, and a particular percentage of the unlabeled graphs responsive to the Cypher query may be 45%. In circumstances where equivalence of the two percentages is requested (the set variance range being 0%), then the percentage of the ground truth graphs responsive to the Cypher query and the percentage of the unlabeled graphs responsive to the Cypher query may be dissimilar.

Modifications, additions, or omissions may be made to the method 900 without departing from the scope of the disclosure. For example, the designations of different elements in the manner described is meant to help explain concepts described herein and is not limiting. Further, the method 900 may include any number of other elements or may be implemented within other systems or contexts than those described.

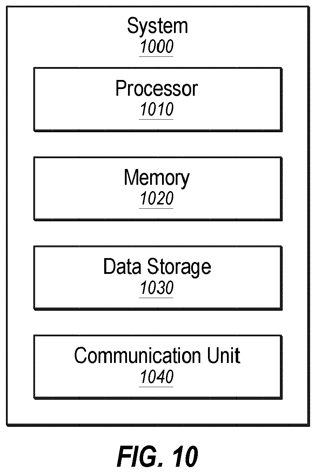

Figure 10 illustrates an example computing system 1000, according to at least one embodiment described in the present disclosure. The computing system 1000 may include a processor 1010, a memory 1020, a data storage 1030, and/or a communication unit 1040, which all may be communicatively coupled. Any or all of the system 100 of Figure 1 may be implemented as a computing system consistent with the computing system 1000, including the graph storage 110, the data augmenter 140, and/or the graph machine learning module 150.

Generally, the processor 1010 may include any suitable special-purpose or general-purpose computer, computing entity, or processing device including various computer hardware or software modules and may be configured to execute instructions stored on any applicable computer-readable storage media. For example, the processor 1010 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 10, it is understood that the processor 1010 may include any number of processors distributed across any number of network or physical locations that are configured to perform individually or collectively any number of operations described in the present disclosure. In some embodiments, the processor 1010 may interpret and/or execute program instructions and/or process data stored in the memory 1020, the data storage 1030, or the memory 1020 and the data storage 1030. In some embodiments, the processor 1010 may fetch program instructions from the data storage 1030 and load the program instructions into the memory 1020.

After the program instructions are loaded into the memory 1020, the processor 1010 may execute the program instructions, such as instructions to perform any of the methods 200, 500, 700, and/or 900 of Figures 2, 5, 7 and 9, respectively. For example, the processor 1010 may obtain instructions regarding obtaining graph data, labeling the obtained graph data, and/or categorizing the graph data as different classes of graphs.

The memory 1020 and the data storage 1030 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 1010. For example, the memory 1020 and/or the data storage 1030 may store obtained graph data (such as the graph data obtained from the graph storage 110 in Figure 1). In some embodiments, the computing system 1000 may or may not include either of the memory 1020 and the data storage 1030.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 1010 to perform a certain operation or group of operations.

The communication unit 1040 may include any component, device, system, or combination thereof that is configured to transmit or receive information over a network. In some embodiments, the communication unit 1040 may communicate with other devices at other locations, the same location, or even other components within the same system. For example, the communication unit 1040 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 1040 may permit data to be exchanged with a network and/or any other devices or systems described in the present disclosure. For example, the communication unit 1040 may allow the system 1000 to communicate with other systems, such as computing devices and/or other networks.

One skilled in the art, after reviewing this disclosure, may recognize that modifications, additions, or omissions may be made to the system 1000 without departing from the scope of the present disclosure. For example, the system 1000 may include more or fewer components than those explicitly illustrated and described.

The embodiments described in the present disclosure may include the use of a special purpose or general-purpose computer including various computer hardware or software modules. Further, embodiments described in the present disclosure may be implemented using computer-readable media for carrying or having computer-executable instructions or data structures stored thereon.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, comprising:
obtaining a graph dataset;
identifying a plurality of first graphs of the graph dataset as ground truth graphs in response to each first graph of the plurality of first graphs having a heuristic characteristic and being categorized as a first class or as a second class based on labeling of the first graphs with respect to the heuristic characteristic;
identifying a second graph of the graph dataset as an unlabeled graph, the second graph being unlabeled with respect to the heuristic characteristic;
comparing the second graph to the first class, the comparing being based on the heuristic characteristic and including one or more operations selected from a group of operations including performing similarity matching, model-based heuristics operations, or query analysis operations;
comparing the second graph to the second class, the comparing being based on the heuristic characteristic and including one or more operations selected from the group of operations including performing similarity matching, model-based heuristics operations, or query analysis operations;
categorizing the second graph as the first class or as the second class based on the comparing of the second graph to the first class and the comparing of the second graph to the second class; and
training a machine learning model using the plurality of first graphs and the categorized second graph.

2. The method of claim 1, wherein the similarity matching comprises:
determining a plurality of first multi-dimensional arrays in which each first multi-dimensional array corresponds to a respective first graph;
determining a second multi-dimensional array corresponding to the second graph;
determining a first comparison array based on the first multi-dimensional arrays that correspond to the first graphs labeled as the first class;
determining a second comparison array based on the first multi-dimensional arrays that correspond to the first graphs labeled as the second class; and
categorizing the second graph as the first class or as the second class based on one or more comparisons between the second multi-dimensional array and the first comparison array and the second comparison array.

3. The method of claim 2, further comprising:
determining a first similarity score based on a comparison between the second multi-dimensional array and the first comparison array;
determining a second similarity score based on a comparison between the second multi-dimensional array and the second comparison array; and
categorizing the second graph as the first class or as the second class based on the first similarity score and the second similarity score.

4. The method of claim 2, wherein comparing the second multi-dimensional array to the first comparison array and the second comparison array comprises determining at least one of a Jaccard similarity, a cosine similarity, a Euclidean similarity, a Bray-Curtis distance, a Canberra distance, a Chebyshev distance, a Manhattan distance, a Minkowski distance, a square Euclidean distance, an equality comparison, a greater-than/less-than comparison, or an absolute value greater-than/less-than comparison.

5. The method of claim 1, wherein the model-based heuristics operations comprise:
determining a first prediction probability based on a value of the heuristic characteristic corresponding to the first class;
determining a lower probabilistic limit corresponding to the first class based on the first prediction probability;
determining an upper probabilistic limit corresponding to the second class based on the first prediction probability;
determining a second prediction probability based on a value of the heuristic characteristic corresponding to the second graph; and
categorizing the second graph as the first class or as the second class based on the second prediction probability, the lower probabilistic limit corresponding to the first class, and the upper probabilistic limit corresponding to the second class.

6. The method of claim 5, further comprising categorizing the second graph as a third class in response to the second prediction probability being greater than the lower probabilistic limit and less than the upper probabilistic limit.

7. The method of claim 1, wherein the query analysis operations comprise:
generating a Cypher query, the Cypher query identifying the plurality of first graphs as the first class or as the second class based on the heuristic characteristic and the responsiveness of the first graphs to the Cypher query being known;
applying the Cypher query to a plurality of unlabeled graphs of the graph dataset, the plurality of unlabeled graphs including the second graph;
determining a responsiveness of the plurality of unlabeled graphs to the Cypher query;
comparing the responsiveness of the plurality of unlabeled graphs to the Cypher query against the responsiveness of the first graphs to the Cypher query;
categorizing a first portion of the unlabeled graphs as the first class based on the comparing of the responsiveness of the plurality of unlabeled graphs to the Cypher query against the responsiveness of the first graphs to the Cypher query; and
categorizing a second portion of the unlabeled graphs as the second class based on the comparing of the responsiveness of the plurality of unlabeled graphs to the Cypher query against the responsiveness of the first graphs to the Cypher query.

8. The method of claim 7, further comprising categorizing a third portion of the unlabeled graphs as a third class based on the comparing of the responsiveness of the plurality of unlabeled graphs to the Cypher query against the responsiveness of the first graphs to the Cypher query.

9. One or more non-transitory computer-readable storage media configured to store instructions that, in response to being executed, cause a system to perform operations, the operations comprising:
obtaining a graph dataset;
identifying a plurality of first graphs of the graph dataset as ground truth graphs in response to each first graph of the plurality of first graphs having a heuristic characteristic and being categorized as a first class or as a second class based on labeling of the first graphs with respect to the heuristic characteristic;
identifying a second graph of the graph dataset as an unlabeled graph, the second graph being unlabeled with respect to the heuristic characteristic;
comparing the second graph to the first class, the comparing being based on the heuristic characteristic and including one or more operations selected from a group of operations including performing similarity matching, model-based heuristics operations, or query analysis operations;
comparing the second graph to the second class, the comparing being based on the heuristic characteristic and including one or more operations selected from the group of operations including performing similarity matching, model-based heuristics operations, or query analysis operations;
categorizing the second graph as the first class or as the second class based on the comparing of the second graph to the first class and the comparing of the second graph to the second class; and
training a machine learning model using the plurality of first graphs and the categorized second graph.

10. The one or more non-transitory computer-readable storage media of claim 9, wherein the similarity matching comprises:
determining a plurality of first multi-dimensional arrays in which each first multi-dimensional array corresponds to a respective first graph;
determining a second multi-dimensional array corresponding to the second graph;
determining a first comparison array based on the first multi-dimensional arrays that correspond to the first graphs labeled as the first class;
determining a second comparison array based on the first multi-dimensional arrays that correspond to the first graphs labeled as the second class; and
categorizing the second graph as the first class or as the second class based on one or more comparisons between the second multi-dimensional array and the first comparison array and the second comparison array.

11. The one or more non-transitory computer-readable storage media of claim 10, further comprising:
determining a first similarity score based on a comparison between the second multi-dimensional array and the first comparison array;
determining a second similarity score based on a comparison between the second multi-dimensional array and the second comparison array; and
categorizing the second graph as the first class or as the second class based on the first similarity score and the second similarity score.

12. The one or more non-transitory computer-readable storage media of claim 9, wherein the model-based heuristics operations comprise:
determining a first prediction probability based on a value of the heuristic characteristic corresponding to the first class;
determining a lower probabilistic limit corresponding to the first class based on the first prediction probability;
determining an upper probabilistic limit corresponding to the second class based on the first prediction probability;
determining a second prediction probability based on a value of the heuristic characteristic corresponding to the second graph; and
categorizing the second graph as the first class or as the second class based on the second prediction probability, the lower probabilistic limit corresponding to the first class, and the upper probabilistic limit corresponding to the second class.

13. The one or more non-transitory computer-readable storage media of claim 12, further comprising categorizing the second graph as a third class in response to the second prediction probability being greater than the lower probabilistic limit and less than the upper probabilistic limit.

14. The one or more non-transitory computer-readable storage media of claim 9, wherein the query analysis operations comprise:
generating a Cypher query, the Cypher query identifying the plurality of first graphs as the first class or as the second class based on the heuristic characteristic and the responsiveness of the first graphs to the Cypher query being known;
applying the Cypher query to a plurality of unlabeled graphs of the graph dataset, the plurality of unlabeled graphs including the second graph;
determining a responsiveness of the plurality of unlabeled graphs to the Cypher query;
comparing the responsiveness of the plurality of unlabeled graphs to the Cypher query against the responsiveness of the first graphs to the Cypher query;
categorizing a first portion of the unlabeled graphs as the first class based on the comparing of the responsiveness of the plurality of unlabeled graphs to the Cypher query against the responsiveness of the first graphs to the Cypher query; and
categorizing a second portion of the unlabeled graphs as the second class based on the comparing of the responsiveness of the plurality of unlabeled graphs to the Cypher query against the responsiveness of the first graphs to the Cypher query.

15. The one or more non-transitory computer-readable storage media of claim 14, further comprising categorizing a third portion of the unlabeled graphs as a third class based on the comparing of the responsiveness of the plurality of unlabeled graphs to the Cypher query against the responsiveness of the first graphs to the Cypher query.

16. A system comprising:
one or more processors; and
one or more non-transitory computer-readable storage media configured to store instructions that, in response to being executed, cause the system to perform operations, the operations comprising:
obtaining a graph dataset;
identifying a plurality of first graphs of the graph dataset as ground truth graphs in response to each first graph of the plurality of first graphs having a heuristic characteristic and being categorized as a first class or as a second class based on labeling of the first graphs with respect to the heuristic characteristic;
identifying a second graph of the graph dataset as an unlabeled graph, the second graph being unlabeled with respect to the heuristic characteristic;
comparing the second graph to the first class, the comparing being based on the heuristic characteristic and including one or more operations selected from a group of operations including performing similarity matching, model-based heuristics operations, or query analysis operations;
comparing the second graph to the second class, the comparing being based on the heuristic characteristic and including one or more operations selected from the group of operations including performing similarity matching, model-based heuristics operations, or query analysis operations;
categorizing the second graph as the first class or as the second class based on the comparing of the second graph to the first class and the comparing of the second graph to the second class; and
training a machine learning model using the plurality of first graphs and the categorized second graph.

17. The system of claim 16, where the similarity matching comprises:
determining a plurality of first multi-dimensional arrays in which each first multi-dimensional array corresponds to a respective first graph;
determining a second multi-dimensional array corresponding to the second graph;
determining a first comparison array based on the first multi-dimensional arrays that correspond to the first graphs labeled as the first class;
determining a second comparison array based on the first multi-dimensional arrays that correspond to the first graphs labeled as the second class; and
categorizing the second graph as the first class or as the second class based on one or more comparisons between the second multi-dimensional array and the first comparison array and the second comparison array.

18. The system of claim 17, further comprising:
determining a first similarity score based on a comparison between the second multi-dimensional array and the first comparison array;
determining a second similarity score based on a comparison between the second multi-dimensional array and the second comparison array; and
categorizing the second graph as the first class or as the second class based on the first similarity score and the second similarity score.

19. The system of claim 16, wherein the model-based heuristics operations comprise:
determining a first prediction probability based on a value of the heuristic characteristic corresponding to the first class;
determining a lower probabilistic limit corresponding to the first class based on the first prediction probability;
determining an upper probabilistic limit corresponding to the second class based on the first prediction probability;
determining a second prediction probability based on a value of the heuristic characteristic corresponding to the second graph; and
categorizing the second graph as the first class or as the second class based on the second prediction probability, the lower probabilistic limit corresponding to the first class, and the upper probabilistic limit corresponding to the second class.

20. The system of claim 16, wherein the query analysis operations comprise:
generating a Cypher query, the Cypher query identifying the plurality of first graphs as the first class or as the second class based on the heuristic characteristic and the responsiveness of the first graphs to the Cypher query being known;
applying the Cypher query to a plurality of unlabeled graphs of the graph dataset, the plurality of unlabeled graphs including the second graph;
determining a responsiveness of the plurality of unlabeled graphs to the Cypher query;
comparing the responsiveness of the plurality of unlabeled graphs to the Cypher query against the responsiveness of the first graphs to the Cypher query;
categorizing a first portion of the unlabeled graphs as the first class based on the comparing of the responsiveness of the plurality of unlabeled graphs to the Cypher query against the responsiveness of the first graphs to the Cypher query; and
categorizing a second portion of the unlabeled graphs as the second class based on the comparing of the responsiveness of the plurality of unlabeled graphs to the Cypher query against the responsiveness of the first graphs to the Cypher query.
